# EUROPEAN PATENT APPLICATION

(11) **EP 4 213 126 A1**
(43) Date of publication of application: **19.07.2023**
(21) Application number: 21866639.4
(22) Date of filing: 02.09.2021
(51) Int. Cl.: G08G 1/09, H04W 4/44, H04W 48/16, H04W 48/18, H04W 88/06, H04W 4/48, H04W 4/60, H04L 12/54, H04L 47/2491, H04L 47/80, H04L 47/70, H04L 67/12, H04L 67/60, H04W 76/16, H04W 40/12

(54) **RADIO COMMUNICATION DEVICE FOR VEHICLE, AND COMMUNICATION CONTROL METHOD**

(30) Priority: 08.09.2020 JP 2020150829
(71) Applicant: DENSO CORPORATION, Kariya-city, Aichi-pref., 448-8661 (JP)
(72) Inventor: HOSHINO Masayuki, Kariya-city Aichi-pref., 448-8661 (JP)
(74) Representative: Winter, Brandl - Partnerschaft mbB
(86) International application number: PCT/JP2021/032268
(87) International publication number: WO 2022/054680

(57) **Abstract**

A wireless communication device (5) used in a vehicle is configured to be capable of using multiple APNs in parallel, and includes a speed index acquisition unit (F2), a communication request acquisition unit (F31), and a path selection unit (F32), as functions. The speed index acquisition unit (F2) calculates a RSRP of a serving cell corresponding to each SIM 55. The communication request acquisition unit (F31) acquires a delay allowable amount indicating a length of an allowable communication delay time from each of in-vehicle devices (6) connected to the wireless communication device (5). The path selection unit (F32) allocates an APN which is relatively large in the RSRP among the wireless communication services to an in-vehicle device (6) that is relatively small in the delay allowable amount among the in-vehicle devices.

## Description

### CROSS REFERENCE TO RELATED APPLICATION

The present application is based on Japanese Patent Application No. 2020-150829 filed on September 8, 2020, and the entire disclosure of the above application is incorporated herein by reference.

### TECHNICAL FIELD

The present disclosure relates to a vehicle wireless communication device and a communication control method that perform communication using multiple types of communication methods in parallel.

### BACKGROUND

Patent Literature 1 discloses a configuration that is capable of performing wireless communication using multiple types of communication methods. In the configuration, a communication performance of each communication method is scored based on multiple types of indices indicating a radio wave environment, and a communication method used for data communication is selected based on scores of the communication methods. Specifically, the communication performance of each communication method is scored based on a number of multipaths, a degree of interference, an amount of Doppler shift, and an estimation value of an effective throughput. The communication method with the highest score is selected.

The communication methods assumed in Patent Literature 1 are, for example, FSK, CDMA, OFDM, QPSK, and the like. FSK is an abbreviation for Frequency shift keying. COMA is an abbreviation for Code Division Multiple Access. OFDM is an abbreviation for Orthogonal Frequency Division Multiplexing. QPSK is an abbreviation for Quadrature Phase Shift Keying.

In addition, 3GPP has proposed a method of optimizing network processing according to usage characteristics of mobile communication terminals (Non-Patent Literature 1, etc.).

### PRIOR ART LITERATURE

### PATENT LITERATURE

Patent Literature 1: JP 4655955 B2

### NON-PATENT LITERATURE

Non-Patent Literature 1: 3GPP TS 36.314 V15.1.0 (2018-07) 3rd Generation Partnership Project, "Evolved Universal Terrestrial Radio Access (E-UTRA); Layer 2 - Measurements"

### SUMMARY

In the configuration disclosed in Patent Literature 1, only the number of multipaths, the degree of interference, the amount of Doppler shift, and the estimated value of the effective throughput are assumed as parameters for selecting a communication service from multiple communication services for usage in communication. Patent Literature 1 does not disclose a configuration for selecting a communication service based on indices other than the above. By using other parameters, it may be possible to further reduce a risk that a delay in communication between an in-vehicle device and an external device exceeds a predetermined acceptable range.

The present disclosure has been made based on this situation, and an object of the present disclosure is to provide a vehicle wireless communication device and a communication control method that are capable of reducing a risk of communication delay time exceeding a predetermined acceptable range.

A vehicle wireless communication device for achieving the object, for example, is used as an interface for communication between at least one in-vehicle device of a vehicle and an external device that is another communication device placed outside the vehicle. The vehicle wireless communication device includes subscriber identification modules, a received power observation unit, a delay allowable amount acquisition unit, and a communication path selection unit. The subscriber identification modules correspond to, respectively, wireless communication services available to the vehicle wireless communication device. The received power observation unit is configured to obtain a received power measurement value for each of the wireless communication services, and the received power measurement value is a received signal strength of a reference signal transmitted from a radio base station. The delay allowable amount acquisition unit is configured to acquire a delay allowable amount from the at least one in-vehicle device, and the delay allowable amount indicates directly or indirectly a length of delay time allowable in the communication. The communication path selection unit is configured to select a wireless communication path from among the wireless communication services for the communication between the at least one in-vehicle device and the external device based on the received power measurement value of each of the wireless communication services and the delay allowable amount of the at least one in-vehicle device. The communication path selection unit is configured to allocate a wireless communication service, which is relatively large in the received power measurement value among the wireless communication services, to an in-vehicle device that is relatively small in the delay allowable amount among the at least one in-vehicle device.

In wireless communication, it can be expected that the higher the received power measurement value determined depending on the strength of received signals from a network device, the higher the communication speed. Therefore, by allocating a wireless communication service, which is relatively large in the received power measurement value among the wireless communication services, to an in-vehicle device that is relatively small in the delay allowable amount among the in-vehicle devices, a risk of an actual delay time exceeding an allowable range of delay time required by the in-vehicle device can be reduced.

A communication control method for achieving the object is a method for control of communication between at least one in-vehicle device of a vehicle and an external device that is a communication device placed outside the vehicle. In the communication control method, wireless communication services are used in parallel. The wireless communication services correspond, respectively, to subscriber identification modules. The communication control method is executed by at least one processor. The communication control method includes a received power observation step, a delay allowable amount acquisition step, and a communication path selection step. The received power observation step is a step of obtaining a received power measurement value for each of the wireless communication services, and the received power measurement value is a received signal strength of a reference signal transmitted from a radio base station. The delay allowable amount acquisition step is a step of acquiring a delay allowable amount from the at least one in-vehicle device, and the delay allowable amount indicates directly or indirectly a length of allowable communication delay time. The communication path selection step is a step of selecting a wireless communication service from among the wireless communication services for the communication between the at least one in-vehicle device and the external device based on the received power measurement value of each of the wireless communication services and the delay allowable amount of the at least one in-vehicle device. The communication path selection step includes allocating a wireless communication service, which is relatively large in the received power measurement value among the wireless communication services, to an in-vehicle device that is relatively small in the delay allowable amount among the at least one vehicle device.

According to the above method, the similar effects can be obtained by the operating principle similar to that of the vehicle wireless communication device.

Each reference symbol with parentheses described in the claims indicates a correspondence relationship between a configuration described in claims and an exemplary configuration described in the embodiments of the disclosure. It should be noted that each reference symbol with parentheses described in the claims does not limit a technical scope of the present disclosure to the exemplary configuration described in the embodiments of disclosure.

### BRIEF DESCRIPTION OF DRAWINGS

FIG. 1 is a diagram for describing an overview of a mobile communication system 100.
FIG. 2 is a diagram showing an example of a configuration of an in-vehicle communication system 1.
FIG. 3 is a block diagram showing a configuration of a wireless communication device 5.
FIG. 4 is a flowchart showing a processing flow related to APN allocation.
FIG. 5 is a diagram for explaining an operation of a communication control unit F3.
FIG. 6 is a block diagram showing a modification of the wireless communication device 5.
FIG. 7 is a diagram for explaining an operation example when determining APN allocation for each in-vehicle device 6 in consideration of an assigned frequency for each APN.
FIG. 8 is a diagram for explaining an operation example when determining APN allocation for each in-vehicle device 6 in consideration of an assigned frequency for each APN.
FIG. 9 is a block diagram showing a modification of the wireless communication device 5.
FIG. 10 is a diagram for explaining an operation example when determining APN allocation for each in-vehicle device 6 in consideration of a delay threshold for each APN.
FIG. 11 is a diagram showing an example of APN allocation for each application.

### DETAILED DESCRIPTION

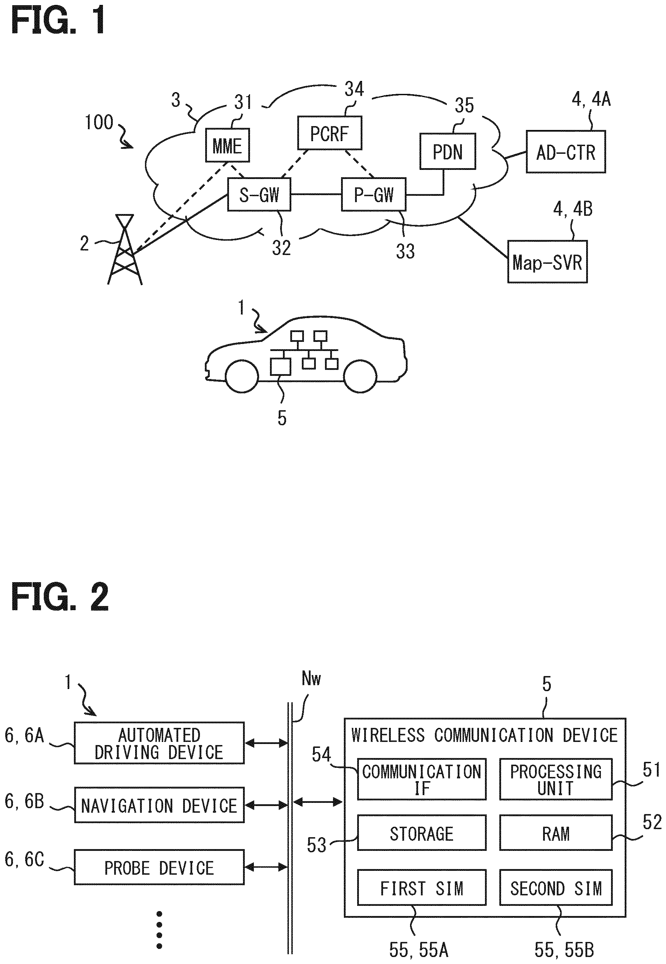

Hereinafter, an embodiment of the present disclosure will be described below with reference to the drawings. FIG. 1 is a diagram showing one example of a schematic configuration of a mobile communication system 100 in the present disclosure. The mobile communication system 100 provides wireless communication conforming to LTE (Long Term Evolution), for example. The parts whose description are omitted in the present embodiment can be implemented according to the method specified in LTE, such as the method disclosed in Non-Patent Literature 1. The mobile communication system 100 may provide wireless communication conforming to 4G, 5G, or the like. The following embodiment can be implemented with appropriate changes so as to conform to 4G, 5G, and the like.

As shown in FIG. 1, the mobile communication system 100 includes an in-vehicle communication system 1, a radio base station 2, a core network 3, an automated driving management center 4A, and a map server 4B. Each of the automated driving management center 4A and the map server 4B corresponds to one example of external devices 4 for the in-vehicle communication system 1. The external devices 4 are communication devices located outside a vehicle.

The in-vehicle communication system 1 is a communication system built in a vehicle. The in-vehicle communication system 1 can be installed in various vehicles that can travel on a road, such as four-wheeled vehicles, two-wheeled vehicles, three-wheeled vehicles, and the like. Motorized bicycles may also be included in the two-wheeled vehicles. The vehicle (hereinafter also referred to as an equipped vehicle) to which this in-vehicle communication system is applied may be an owner's car owned by an individual, or may be a vehicle used for a car sharing service or a vehicle rental service. Also, the equipped vehicle may be a service car. The service car includes a taxi, a fixed-route bus, a shared bus, and the like. Also, the service car may be a robot taxi or a driverless bus without a driver. The service car may include a vehicle as an automatic delivery robot, i.e., a driverless delivery robot that automatically transports packages to a predetermined destination. Furthermore, the equipped vehicle may be a remotely operated vehicle which is remotely operated by an operator outside the vehicle. The operator is a person who has an authority to control the vehicle by remote control from the outside of the vehicle.

The in-vehicle communication system 1 performs data communication with the external devices 4 such as the automated driving management center 4A via the radio base station 2 and the core network 3. The in-vehicle communication system 1 includes a wireless communication device 5 as a configuration that provides a function to perform the wireless communication. The wireless communication device 5 corresponds to a user equipment (so-called UE) for the core network 3. The wireless communication device 5 may be configured to be removable from the vehicle by a user. Further, the wireless communication device 5 may be a mobile terminal such as a smart phone brought into a vehicle compartment by the user. The wireless communication device 5 corresponds to a vehicle wireless communication device.

The wireless communication device 5 is configured to be capable of using multiple wireless communication services with different APNs (Access Point Names), and performs data communication with the various external devices 4 using the wireless communication services properly. An APN is, in one aspect, an identifier that defines a communication service. The APN is associated with a communication service provider (so-called carrier) that provides the communication service. When the APNs are different, even when the external devices 4 serving as communication partners for the wireless communication device 5 are the same, paths through which data flows to the external devices 4 are substantially or virtually different. The multiple wireless communication services provide communication paths different from each other. That is, the wireless communication device 5 is capable of performing data communication with the external devices 4 by using different multiple communication paths corresponding to the respective APNs according to their applications and other factors. The in-vehicle communication system 1 including the wireless communication device 5 will be described later.

The radio base station 2 is a facility that transmits and receives wireless signals to and from the in-vehicle communication system 1. The radio base station 2 is also called an eNB (evolved NodeB). The radio base station 2 may be a gNB (next generation NodeB) used in 5G. The radio base station 2 is arranged for each predetermined cell. The radio base station 2 is connected to the core network 3 via an access line such as an IP (Internet Protocol) network. The radio base station 2 relays traffic between the wireless communication device 5 and the core network 3. The radio base station 2 allocates a transmission opportunity to the in-vehicle communication system 1, based on a request from the in-vehicle communication system 1, for example. The transmission opportunity consists of frequency band, timing, modulation scheme and the like, which are available for data transmission.

The radio base station 2 transmits a CSI-RS (CSI-Reference Signal) periodically or at a time of occurrence of a predetermined event in order to grasp CSI (Channel State Information). The CSI is information indicating a state of a transmission path. The CSI-RS is a predetermined reference signal for measuring a wireless channel state. The CSI-RS corresponds to a signal requesting the UE to return a feedback signal including a PMI (Precoding Matrix Indicator). Details of a configuration of the feedback signal transmitted from the UE to the radio base station 2 are omitted. In one aspect, the CSI-RS corresponds to a control signal for the wireless communication device 5 or a MME 31 to select a serving cell for the wireless communication device 5.

Further, the radio base station 2 transmits also a CRS (Cell-specific RS) as a control signal for cell selection periodically or upon the occurrence of a predetermined event. The CRS is a cell-specific reference signal used for measuring a downlink reception quality and the like. In this disclosure, CRS and CSI-RS are also described simply as a reference signal or RS. Transmission of the RS by the radio base station 2 may be performed periodically, or may be triggered by receiving a request from the UE, for example.

The core network 3 is a so-called EPC (Evolved Packet Core). The core network 3 provides functions such as user authentication, contract analysis, setting of data packet transfer path, and QoS (Quality of Service) control. The core network 3 may include public telecommunications networks provided by telecommunications service providers, such as IP networks or mobile telephone networks, for example. The core network 3 corresponds to a wireless communication network.

The core network 3 includes, for example, the MME 31, a S-GW 32, a P-GW 33 and a PCRF 34. MME stands for Mobility Management Entity. The MME 31 manages the UE located in the cell and controls the radio base station 2. The MME 31 has a role as a gateway for control signals between the radio base station 2 and the S-GW 32, for example. S-GW stands for Serving Gateway. The S-GW 32 is a configuration corresponding to a gateway for data from the UE. P-GW stands for Packet Data Network Gateway. The P-GW 33 corresponds to a gateway for connection to a PDN (Packet Data Network) 35 such as the Internet. The P-GW 33 allocates IP addresses and transfers packets to the S-GW. PCRF is an abbreviation for Policy and Charging Rules Function. The PCRF 34 is a logical node that performs controls for the QoS and charging for user data transfer. The PCRF 34 includes a database with network policies and charging rules.

Although Fig. 1 shows only one radio base station 2, one MME31, one S-GW32, one P-GW33, and one PCRF34, the number of each of these may be more than one in the network as a whole. For example, PCRF 34 may exist per APN or per telecommunication service provider. Transfer paths of data in the core network 3 are different for each APN. In Fig. 1, solid lines connecting the elements in the core network 3 represent the transfer paths of user data, and dashed lines represent paths of control signals.

In addition, the core network 3 may include an HLR (Home Location Register) / HSS (Home Subscriber Server) and the like. For example, names and combinations of the devices constituting the core network 3 can be appropriately changed so as to correspond to a communication standard adopted for the mobile communication system 100, such as 5G. Also, the arrangement of functions in the core network 3 can be changed as appropriate. For example, functions provided by the PCRF 34 may be provided by another device.

Hereinafter, the devices that constitute the core network 3, such as the MME 31 and the S-GW 32, are simply referred to as the core network 3 when these devices are not distinguished. Each of the devices that constitute the core network 3, such as the MME 31 and the S-GW32, corresponds to a network device. The radio base station 2 can also be included in the network device. This is because the radio base station 2 has a role as an interface for communication between the core network 3 and the wireless communication device 5. In the present disclosure, an expression "network device" can be read as "the radio base station 2 or the core network 3". The network device can include various facilities for communication between the wireless communication device 5 and the external device 4.

The automated driving management center 4A is a center that manages an operation state of the vehicle that travels by automated driving. The automated driving management center 4A is configured to be capable of performing data communication with the in-vehicle communication system 1 via the radio base station 2 or the like. For example, the automated driving management center 4A receives a traveling state report uploaded from the in-vehicle communication system 1, and determines whether there is an abnormality in the in-vehicle communication system 1. The traveling state report is a data set that indicates a state inside the vehicle during automated driving and a state outside the vehicle during automated driving. The automated driving management center 4A may store the traveling state report transmitted from each vehicle in an operation recording device (not shown). In addition, the automated driving management center 4A may have a function of creating and distributing a medium- to long-term control plan, such as calculation of a travel route, for the vehicle.

The map server 4B is a server that distributes map data stored in a predetermined database in response to a request from a vehicle. The map server 4B is capable of performing data communication with the in-vehicle communication system 1 via the radio base station 2 or the like. The map data distributed by the map server 4B may be high definition map data or navigation map data. The high definition map data corresponds to map data indicating a road structure, position coordinates of features disposed along the road, and the like with an accuracy available for automated driving. The navigation map data is map data for navigation. The navigation map data corresponds to map data lower in accuracy than the high definition map data.

The external device 4 may be various servers/centers other than those described above. The mobile communication system 100 may include a remote control center that remotely controls the vehicle by communicating with a vehicle-side remote control device installed in the vehicle. The remote control center includes a center-side remote control device which is a device for an operator to remotely control the vehicle. The center-side remote control device is configured as a cockpit including, for example, a display showing a scenery around the vehicle and operation members such as a steering wheel. The remote control center may be integrated with the above-described automated driving management center 4A. The automated driving management center 4A as the remote control center may remotely control the vehicle, for example, in response to a request from an automated driving device 6A.

### <Configuration of In-Vehicle Communication System 1>

The in-vehicle communication system 1 includes, for example, the wireless communication device 5, the automated driving device 6A, a navigation device 6B, and a probe device 6C. The wireless communication device 5 is connected to various in-vehicle devices 6 such as the automated driving device 6A, the navigation device 6B, and the probe device 6C via an in-vehicle network Nw. The in-vehicle network Nw is a communication network built in the vehicle. Devices connected to the in-vehicle network Nw can communicate with each other. That is, the wireless communication device 5 is configured to be capable of mutually communicating with each of the automated driving device 6A, the navigation device 6B, and the probe device 6C. The in-vehicle network Nw is configured such that multiplexing is available in communication by a time division multiple access (TDMA), for example. The multiplexing in communication may be accomplished by frequency division multiple access (FDMA), code division multiple access (CDMA), or orthogonal frequency division multiplexing (OFDM), for example.

Specific devices included in the in-vehicle communication system 1 may communicate directly with each other without the in-vehicle network Nw. In FIG. 2, although a network topology of the in-vehicle network Nw is configured as a bus type, the network topology thereof is not limited to the bus type. The network topology of the in-vehicle network may be a mesh type, a star type, or a ring type, for example. A standard of the in-vehicle network Nw may be selected from various standards, such as controller area network (CAN is a registered trademark), Ethernet (registered trademark), and FlexRay (registered trademark). Further, a mode of connection between the wireless communication device 5 and each in-vehicle device 6 is not limited to wired connection, and may be wireless connection. The in-vehicle device 6 may be an ECU (Electronic Control Unit).

The wireless communication device 5 has multiple subscriber identity modules (SIMs) 55 and is capable of using multiple APNs corresponding to the respective SIMs 55. In other words, the wireless communication device 5 is configured to be capable of wirelessly communicating with the multiple external devices 4 by using multiple wireless communication services corresponding to the respective APNs. The wireless communication device 5 uses different wireless communication services corresponding to the respective APNs based on a purpose of communication and a communication status. The wireless communication device 5 corresponds to an interface through which each in-vehicle device 6 communicates wirelessly with the external devices 4 as predetermined communication partners. The wireless communication device 5 as a wireless communication interface corresponds to a device executing at least one of two processes. One of the two processes is a process in which data input from the in-vehicle device 6 is transmitted to the external device 4. The other of the two processes is a process in which data received from the external device 4 is transmitted to the in-vehicle device 6. By installing the wireless communication device 5 in the vehicle, the vehicle becomes a connected car that can be connected to the Internet.

The wireless communication device 5 includes a computer as a main component. The computer includes a processing unit 51, a RAM 52, a storage 53, a communication interface 54, SIMs 55, and a bus connecting them. The processing unit 51 is hardware for calculation processing, and is combined with the RAM 52. The processing unit 51 includes at least one calculation core, such as a central processing unit (CPU). The processing unit 51 executes various processes by accessing the RAM 52.

The storage 53 includes a non-volatile storage medium such as a flash memory. A communication control program is stored in the storage 53 as a program executed by the processing unit 51. Execution of the communication control program by the processing unit 51 corresponds to execution of a communication control method which is a method corresponding to the communication control program. In the storage 53, information (for example, profiles) about the APNs available to the wireless communication device 5 is registered. The information about the APNs includes information necessary for the wireless communication device 5 to perform data communication using a telephone line. For example, the information about the APN includes information specifying a gateway (that is, a connection destination) that has a role as a connection window from a telephone line to a network such as the Internet. The communication interface 54 is a circuit to communicate with the in-vehicle device 6 via the in-vehicle network Nw. The communication interface 54 receives various data such as vehicle speed data detected by a vehicle speed sensor. The communication interface 54 may be realized with use of an analog circuit element or an IC.

Each of the SIMs 55 is an IC module in which information for identifying a contractor of a line is recorded. Each of the SIMs 55 may be an IC card, for example. For example, a unique number called IMSI (International Mobile Subscriber Identity) is recorded in each SIM 55 in association with a telephone number of the contractor. Further, the SIM 55 stores setting data related to wireless communication connection such as available frequencies and priorities of frequencies to be observed for determining a serving cell. The wireless communication device 5 of the present embodiment has a first SIM 55A and a second SIM 55B as the SIMs 55. Each SIM 55 may be inserted into a card slot (not shown) or may be an eSIM (Embedded SIM). The concept of SIM 55 here includes both a removable card type and an embedded type (that is, eSIM).

The first SIM 55A and the second SIM 55B are issued by different issuers, i.e., different communication service providers, for example. Therefore, the APNs available by the first SIM 55A and the second SIM 55B are different. This configuration corresponds to a configuration having the multiple SIMs 55 which are different in available APN. A number of APNs that each SIM 55 supports may be one, or may be more than one. For example, the first SIM 55A may be a SIM card tied to a carrier that provides multiple APNs. The second SIM 55B may be also a SIM card that supports multiple APNs. The wireless communication device 5 is configured to be connectable to multiple APNs by having the multiple SIMs 55. In order to simplify the explanation here, it is assumed that each SIM 55 supports one APN. In the following explanations, an APN available by the first SIM 55A is described as an APN_1. An APN available by the second SIM 55B is described as an APN_2. The wireless communication device 5 may have three or more SIMs 55.

The SIMs 55 are different in settings for communication connections, such as the priorities of frequencies of signals to be observed at a time of specifying a serving cell and a combination of available frequencies. For example, when specifying the serving cell, the first SIM 55A is set such that a signal is observed in descending order of frequency, while the second SIM 55B is set such that a signal is observed in ascending order of frequency. The first SIM 55A and the second SIM 55B may be issued by the same communication service provider as long as the settings related to the communication connections are different as described above. A communication service provider corresponding to the first SIM 55A may be a Mobile Virtual Network Operator (MVNO) that uses communication facilities provided by a communication service provider corresponding to the second SIM 55B. Here, the serving cell means the radio base station 2 itself or a cell formed by the radio base station 2, to which the wireless communication device 5 is accessing wirelessly.

The automated driving device 6A is a device that executes a part or all of the driving operations instead of the user by controlling a traveling actuator based on detection results of surrounding monitoring sensors such as a camera and a millimeter wave radar mounted on the vehicle. The traveling actuator includes, for example, a brake actuator as a braking device, an electronic throttle, and a steering actuator. The steering actuator also includes an EPS (Electric Power Steering) motor. The surrounding monitoring sensors are sensors that detect objects existing around the equipped vehicle. The surrounding monitoring sensors may be, for example, a camera, a millimeter wave radar, a LiDAR (Light Detection and Ranging/Laser Imaging Detection and Ranging), or a sonar.

The automated driving device 6A sequentially transmits the traveling state report during automated driving to the automated driving management center 4A via the wireless communication device 5. The traveling state report is a data set indicating situations inside the vehicle and outside the vehicle. The situation inside the vehicle during the automated driving may include an operation state of the automated driving device 6A and a state of an occupant. The data indicating the operation state of the automated driving device 6A also includes a recognition result of the surrounding environment by the automated driving device 6A, a traveling plan, a calculation result of a target control amount of each traveling actuator. The automated driving device 6A outputs various data related to the automated driving described above to the wireless communication device 5 periodically or at a time of occurrence of a predetermined report event.

Further, the automated driving device 6A may receive control support information from the automated driving management center 4A by wireless communication. The control support information is real-time information that becomes a reference for creation of the control plan. More specifically, the control support information may be information indicating a current position, a movement speed and a moving direction of other moving bodies existing around the vehicle. The control support information may include information about semi-dynamic map elements such as positions of sections with traffic restriction, end positions of traffic jams, positions of fallen objects on the road. In that case, the wireless communication device 5 receives data including the control support information from the automated driving management center 4A and outputs it to the automated driving device 6A. A data set as the control support information corresponds to one example of vehicle control data. Further, the automated driving device 6A corresponds to a vehicle control device.

The navigation device 6B is an in-vehicle device 6 that cooperates with an HMI (Human Machine Interface) system including a display to perform route guidance that guides the user along a route to a destination set by the user. The navigation device 6B executes a route guidance process using map data downloaded from the map server 4B, for example. The wireless communication device 5 downloads map data corresponding to the current position of the vehicle or a travel route from the map server 4B in response to a request from the navigation device 6B, and then provides the map data to the navigation device 6B.

The probe device 6C is a device that generates probe data which is data for the map server 4B to generate and update the map data using detection results of the surrounding monitoring sensors. The probe device 6C uploads the prove data to the map server 4B via the wireless communication device 5. For example, the probe device 6C periodically transmits the prove data to the map server 4B as a data set indicating observation positions of features identified by the surrounding monitoring sensors. The probe data corresponds to packaged data of recognition results of lane markings, road signs, traffic signals, and other landmarks within a certain time period (e.g., 400 msec). The probe data may include, for example, transmission source information, traveling track information, traveling road information, and feature information. The traveling track information indicates a track on which the equipped vehicle has traveled. The feature information indicates observation coordinates of features such as landmarks. Further, the probe data may include vehicle behavior information such as vehicle speed, steering angle, yaw rate, turn signal operation information, and wiper operation information.

Devices corresponding to the in-vehicle devices 6 are not limited to those exemplified above. Various in-vehicle devices 6 can be directly or indirectly connected to the wireless communication device 5. For example, the in-vehicle devices 6 may include a driving support device, a driving recorder, an emergency call device, and a self-diagnostic device (so-called OBD which is abbreviation for On-Board Diagnostics). Further, the in-vehicle devices 6 may include a software update device that acquires a program for updating software of a predetermined ECU by wirelessly communicating with a predetermined software update server. The software update device uses the program to update the software of the ECU to which the program is to be applied.

Further, the vehicle may also be remotely operated by the operator existing at the remote control center. The in-vehicle communication system 1 may have the vehicle-side remote control device as the in-vehicle device 6. When the vehicle is remotely controlled, the wireless communication device 5 promptly receives data for the remote control transmitted from the remote control center and then provides it to the vehicle-side remote control device. The vehicle-side remote control device outputs control signals to various traveling actuators based on signals from the remote control center. Further, the vehicle-side remote control device outputs image data, such as images captured by an in-vehicle camera, and sensor data indicating the traveling state, such as vehicle speed, to the wireless communication device 5 as data to be transmitted to the remote control center. The vehicle-side remote control device may be integrated with the automated driving device 6A. The vehicle control data may include the data for the remote control transmitted from the remote control center, and the images captured by the in-vehicle camera and transmitted to the remote control center. Each in-vehicle device 6 transmits and receives various types of data multiplexed by a predetermined method to and from the wireless communication device 5.

### <Functions of Wireless Communication Device 5>

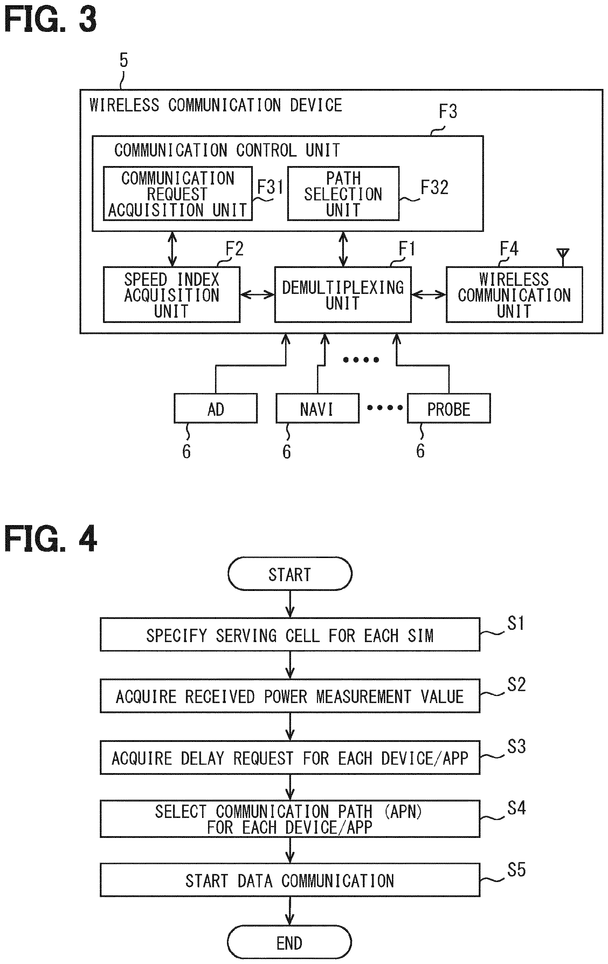

Here, functions and operations of the wireless communication device 5 will be described. The wireless communication device 5 provides functions corresponding to various functional blocks shown in FIG. 3 by executing the communication control program stored in the storage 53. The wireless communication device 5 includes, as functional blocks, a demultiplexing unit F1, a speed index acquisition unit F2, a communication control unit F3, and a wireless communication unit F4.

The demultiplexing unit F1 receives data generated by each in-vehicle device 6 and outputs the data to the wireless communication unit F4. In addition, the demultiplexing unit F1 outputs data received from the wireless communication unit F4 to an in-vehicle device 6 to which the data is to be transferred. For example, the demultiplexing unit F1 acquires original data by demultiplexing the multiplexed data input from each in-vehicle device 6 using a predetermined method. The demultiplexing unit F1 includes a buffer which is a storage area for temporarily holding data input from each in-vehicle device 6 until the data is wirelessly transmitted to the radio base station 2. The buffer may be provided by a rewritable storage medium such as RAM. The demultiplexing unit F1 also has a function of monitoring an amount of data retained in the buffer and information stored in headers of data retained in the buffer.

The data stored in the buffer are retrieved and transmitted by the wireless communication unit F4 to the external device 4 as a destination via a wireless communication path that is set according to the data input source (i.e., the in-vehicle device 6). The wireless communication path here corresponds to a single APN. The wireless communication path can also be understood as a wireless communication service. Allocation of wireless communication paths to the respective in-vehicle devices 6, in other words, allocation of the APNs for the respective in-vehicle device 6 is controlled by the communication control unit F3. Here, the communication control unit F3 controls the wireless data communication paths in units of in-vehicle device 6. However, the present disclosure is not limited to this control. The wireless communication device 5 may switch the wireless communication paths in units of application software. A method of allocating the wireless communication paths for the respective in-vehicle devices 6 will be described later.

The speed index acquisition unit F2 is configured to acquire an index of a communication speed of a wireless communication path corresponding to each SIM 55 (in other words, each APN). The speed index acquisition unit F2 periodically calculates, for each SIM 55, a RSRP of a serving cell corresponding to an APN indicated by the SIM 55. The RSRP corresponds to the index of the communication speed of the wireless communication path. That is, the speed index acquisition unit F2 calculates the RSRP of the serving cell corresponding to each SIM 55 sequentially.

RSRP is an abbreviation for Reference Signal Received Power. The RSRP is an average received power of RSs in single resource elements. The average received power corresponds to an average value of received power observed within a predetermined period. Specifically, the RSRP is determined as a linear average of the received powers (W) at the resource elements carrying the RSs. Calculation of the RSRP by the speed index acquisition unit F2 is performed in cooperation with the wireless communication unit F4. The RSRP may be an average received power of CRSs or an average received power of CSI-RSs (so-called CSI-RSRP). The RS is transmitted evenly in terms of frequency and time. Moreover, the RS is transmitted regardless of data traffic. The RSRP is generally determined by a fixed installation conditions of the radio base station 2, which provides the serving cell, and a measurement environment. The installation conditions include, for example, a transmission power of the radio base station 2 and an orientation and height of the antenna of the radio base station 2. The measurement environment includes, for example, a distance and obstacles between the radio base station 2 and the wireless communication device 5.

As the RSRP becomes larger, the wireless communication device 5 is located at a position where the wireless communication is easier to communicate with the radio base station 2. That is, it can be expected that the communication speed increases and a communication delay decreases with increase in the RSRP. Therefore, among the APN_1 and APN_2, the one having a relatively large RSRP can be expected to have a relatively high communication speed. The RSRP corresponds to a received power measurement value. The received power measurement value may be a median value of the reference signals received within a predetermined sampling period instead of the average value. The received power measurement value may also be an average value or median value of a data group that is a data set of received signal strengths observed within a sampling period and excludes a maximum value, a minimum value, or outliers.

In addition, the speed index acquisition unit F2 also calculates RSSI (Received Signal Strength Indicator) and RSRQ (Reference Signal Received Quality) for each serving cell corresponding to a single SIM 55. The RSSI is a value obtained by measuring a power of an entire LTE system band in an OFDM symbol that carries the RS. In general, resource allocation increases and the RSSI tends to increase with increase in data traffic. The RSRQ is an index indicating a received quality of RS. The larger RSRQ, the better received quality. The RSRQ represents a ratio between the received power of the cell-specific reference signal and a total power within a measurement bandwidth. Specifically, the RSRQ is obtained by dividing a value obtained by multiplying the RSRP by the number of resource blocks by the RSSI. A method disclosed in Non-Patent Literature 1 can be used as a specific calculation method for the RSRP, the RSSI, and the RSRQ. The speed index acquisition unit F2 corresponds to a received power observation unit. The speed index acquisition unit F2 may be integrated with the communication control unit F3. The arrangement of functions in the wireless communication device 5 can be changed as appropriate.

The communication control unit F3 monitors and controls a communication state for each APN. For example, the communication control unit F3 starts a procedure for establishing a connection of a communication line (in other words, EPS bearer) for each APN in response to a vehicle power source being turned on. Then, the communication control unit F3 establishes a network connection (i.e., PDN connection) for each APN. The vehicle power source here may be an accessory power source or an electric power source for traveling. The electric power source for traveling is an electric power source used for vehicle traveling. When the vehicle is a gasoline vehicle, the electric power source for traveling is also called an ignition power source. When the vehicle is an electric vehicle or a hybrid vehicle, a system main relay corresponds to the electric power source for traveling.

The communication control unit F3 includes, as sub-functions, a communication request acquisition unit F31 and a path selection unit F32. The communication request acquisition unit F31 acquires a delay request from each in-vehicle device 6. The delay request is a required quality related to data transmission delay. The delay request is expressed, for example, by a delay allowable value that is a numerical value indicating an allowable delay time for the in-vehicle device 6. The delay allowable value can be set at a numerical value indicating a length of time such as, for example, 100 milliseconds. The smaller the delay allowable value, the faster communication is required to become. The communication request acquisition unit F31 corresponds to a delay allowable amount acquisition unit. The delay allowable value corresponds to a delay allowable amount.

A length of the allowable delay time may be expressed in terms of levels. For example, a delay allowable level representing the length of the allowable delay time may be expressed in four stages of first to fourth levels. Even when the length of allowable delay time is expressed in terms of levels, the allowable delay time becomes shorter as the level number becomes smaller. For example, the first level corresponds a delay request in which a delay time is required to be less than 100 milliseconds, and the second level corresponds to a delay request in which the delay time is required to be 300 milliseconds or less. Further, the third level corresponds a delay request in which the delay time is required to be less than 1000 milliseconds, and the fourth level corresponds to a delay request in which the delay time is allowed to be 1000 milliseconds or more.

In addition, the communication request acquisition unit F31 acquires parameters other than the delay allowable value, which are related to a mode of wireless communication, from each in-vehicle device 6. For example, the communication request acquisition unit F31 acquires an upper limit value of an allowable packet error rate, a resource type related to the bandwidth guarantee, and the like. The resource type related to the bandwidth guarantee includes, for example, whether the bandwidth is guaranteed or not. The communication request acquisition unit F31 may acquire the parameters such as the packet error rate and the resource type from the core network 3. In addition, the communication request acquisition unit F31 may determine the packet error rate and the resource type related to the bandwidth guarantee based on a type of data input from the in-vehicle device 6.

The path selection unit F32 selects a wireless communication path to be used for data communication of each in-vehicle device 6 based on the RSRPs of the serving cells that correspond to the respective SIMs 55 and have been acquired by the speed index acquisition unit F2. The path selection unit F32 corresponds to a communication path selection unit. Details of the operation of the communication control unit F3 will be described later.

The wireless communication unit F4 is a communication module that has a role of a physical layer in a wireless communication protocol such as LTE, for example. The wireless communication unit F4 includes an antenna that can transmit and receive radio waves in a frequency band used in LTE, and a transceiver that executes signal processing equivalent to conversion from baseband signals to high-frequency signals and vice versa in accordance with LTE. The wireless communication unit F4 may have multiple antennas for reception diversity and the like. The wireless communication unit F4 generates a carrier wave signal corresponding to input data by executing processes such as encoding, modulation, and digital-to-analog conversion on the data input from the demultiplexing unit F1. The wireless communication unit F4 outputs the generated carrier wave signal to the antenna to be radiated. Further, the wireless communication unit F4 executes a predetermined process on a reception signal received by the antenna, thereby converting it into a series of information (i.e., digital data) represented by digital values. The predetermined process may include, for example, an analog-to-digital conversion process and a demodulation process. Then, the wireless communication unit F4 outputs data corresponding to the reception signal to the demultiplexing unit F1.

### <Wireless Communication Path Allocation Process>

Here, a path allocation process executed by the wireless communication device 5 will be described with reference to a flowchart of FIG. 4. The flowchart shown in FIG. 4 is executed sequentially at predetermined intervals, such as every 10 seconds. Alternatively, the flowchart shown in FIG. 4 may be executed every time a predetermined event such as a stop of the vehicle is detected.

For simplicity of explanation, a case where the wireless communication device 5 is configured to be capable of using two APNs that are the APN_1 and APN_2 will be described as an example. The APN_1 is an APN corresponding to the first SIM 55A, and the APN_2 is an APN corresponding to the second SIM 55B.

First, at step S1, the communication control unit F3 executes a process to establish a PDN connection for each APN in cooperation with the wireless communication unit F4 and others. For example, the communication control unit F3 transmits an attach request including SIM information to the MME 31 for each APN. Further, the communication control unit F3 notifies the MME 31 of the APN in response to a request from the MME 31, and thereby builds the PDN connection for each APN. The MME 31 establishes the PDN connection including a radio bearer in cooperation with the S-GW and the P-GW depending on the APN notified from the wireless communication device 5. When establishing the PDN connection, contract information, i.e., charging information for each user held by the PCRF 34 is taken into consideration. When the PDN connection, i.e., a wireless communication path for each APN is established at step S1, the process proceeds to step S2. Of course, when the PDN connection for each APN has already been established at the start of this flow, this step S1 may be omitted.

At step S2, the speed index acquisition unit F2 calculates a RSRP of a serving cell corresponding to the APN_1 and a RSRP of a serving cell corresponding to the APN_2. Hereinafter, for convenience, the RSRP of the serving cell corresponding to the APN_1 is described as RSRP_1, and the RSRP of the serving cell corresponding to the APN_2 is described as RSRP_2. The first SIM 55A and the second SIM 55B are different in communication service provider or in settings related to communication connection. Therefore, serving cells corresponding to the respective APNs may also be different. Hence, the RSRP_1 and the RSRP_2 have different values. For example, the RSRP_1 is -80 dBm and the RSRP_2 is -110 dBm. These numerical values are just examples for explaining the operation of the wireless communication device 5. The RSRP_1 and the RSRP_2 are parameters that can dynamically vary depending on, for example, a positional relationship between the wireless communication device 5 and the radio base station 2. When an operation at step S2 is completed, the process proceeds to step S3. Step S2 may be integrated with step S1. Step S2 corresponds to a received power observation step.

At step S3, the communication request acquisition unit F31 acquires the delay allowable value from each in-vehicle device 6. Hereinafter, for convenience, a delay allowable value of the automated driving device 6A is referred to as DA_A, a delay allowable value of the navigation device 6B is referred to as DA_B, and a delay allowable value of the probe device 6C is referred to as DA_C. In one example, the delay allowable value as the delay request of each in-vehicle device 6 is set to a value having a relationship of DA_A < DA_B < DA_C. For example, the delay allowable value (i.e., DA_A) of the automated driving device 6A may be set at 100 milliseconds. The delay allowable value (i.e., DA_B) of the navigation device 6B can be set to a value of, for example, 500 milliseconds which is relatively larger than the delay allowable value (DA_A) of the automated driving device 6A. The delay allowable value (i.e., DA_C) of the probe device 6C may be set at, for example, 2000 milliseconds. Note that the numerical values described above are examples and can be changed as appropriate.

The delay request of each in-vehicle device 6 is input to the wireless communication device 5 from the in-vehicle device 6, as a predetermined control signal. For example, the in-vehicle device 6 is connected to the wireless communication device 5 to communicate each other when the vehicle power source is turned on. The in-vehicle device 6 may notify the wireless communication device 5 of the delay request, at the timing when the connection between the in-vehicle device 6 and the wireless communication device 5 is established. The wireless communication device 5 may acquire the delay request by requesting the delay request from each in-vehicle device 6 at a predetermined timing or periodically. In addition, the delay request may be written in a header of data transmitted from each in-vehicle device 6 to the wireless communication device 5. The delay request may be set for each application software that the in-vehicle device 6 is executing. The step S3 corresponds to a delay allowable amount acquisition step.

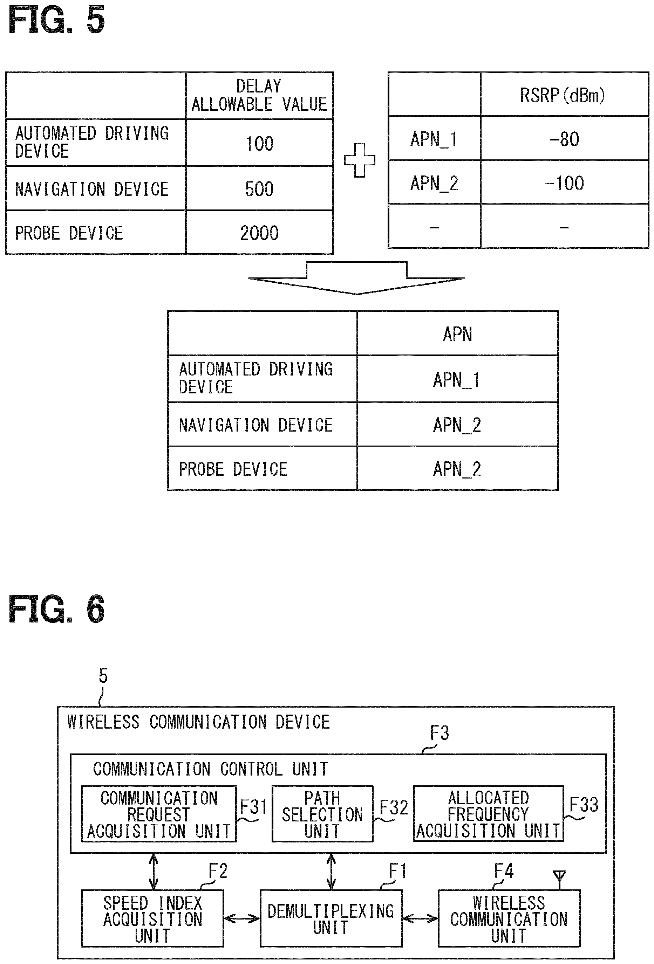

At step S4, the path selection unit F32 selects a wireless communication path for each in-vehicle device 6. The path selection unit F32 allocates one of the wireless communication paths larger in the RSRP than another of the wireless communication paths to one of the in-vehicle devices 6 smaller in the delay allowable value than another of the in-vehicle devices 6. For example, as illustrated in FIG. 5, the path selection unit F32 allocates the APN_1 which has a largest RSRP among the APNs to the automated driving device 6A which has a smallest allowable delay value DA among the in-vehicle devices 6. As a result, the communication between the automated driving device 6A and the automated driving management center 4A is performed through the wireless communication path corresponding to the APN_1. The path selection unit F32 allocates the APN_2 which has a relatively small RSRP to the navigation device 6B and the probe device 6C which have a relatively large delay allowable value DA. As a result, each of the navigation device 6B and the probe device 6C communicates with the external device 4 through the wireless communication path corresponding to the APN_2.

When the wireless communication path corresponding to the APN_1 has an available capacity in terms of communication speed while the APN_1 being allocated to the automated driving device 6A, the path selection unit F32 may allocate APN_1 to the navigation device 6B. One APN may be allocated to multiple in-vehicle devices 6 in a range where the communication speed is kept above an acceptable level. For example, the path selection unit F32 may allocates the APN_2 to multiple in-vehicle devices 6. The step S4 corresponds to a communication path selection step.

At step S5, the communication control unit F3 notifies the wireless communication unit F4 of the wireless communication paths (i.e., APNs) that have been allocated to the respective in-vehicle devices 6 at step S4. In response to this notification, the wireless communication unit F4 applies the wireless communication paths to the respective in-vehicle devices 6. Thereby, data input from the respective in-vehicle devices 6 are transmitted via the wireless communication paths (i.e., APNs) allocated to the input sources. In this example, the communication paths that have been allocated to the respective in-vehicle devices 6 at step S4 are immediately built. However, the present disclosure is not limited to this. For example, an execution of step S5 may be put on hold until the vehicle stops or the communication between the automated driving device 6A and the automated driving management center 4A is completed.

The wireless communication device 5 described above corresponds to a configuration in which the APNs corresponding to the multiple SIMs 55 are used in parallel in the entire vehicle. In this configuration, allocation of the APNs and the SIMs 55 to the respective in-vehicle devices 6 is determined according to the RSRPs of the serving cells specified for the respective SIMs 55. In the wireless communication device 5, the path selection unit F32 allocates an APN having a relatively large RSRP to an in-vehicle device 6 that requires relatively low-delay communication. According to this, highly urgent data communication can be performed with low delay. Further, a risk of occurrence of communication that does not satisfy the required quality for the communication delay required by each in-vehicle device 6 can be reduced.

The highly urgent data communication includes data communication with a high degree of immediacy (so-called real-time performance). The highly urgent data communication is, for example, data communication that requires a maximum delay time to be 100 milliseconds or less. For example, the highly urgent data communication corresponds to a data communication for a vehicle control, such as an automated driving control, a driving support control, and a remote control, or a data communication related to operation management of the automated driving vehicle. That is, data input from the automated driving device 6A, a driving assistance device, and the vehicle-side remote control device have a high degree of necessity to be transmitted at low communication delay. The in-vehicle devices 6 which execute the vehicle control based on signals from the external devices 4, such as the automated driving device 6A, the driving assistance device, and the vehicle-side remote control device, correspond to the vehicle control device.

Data communication with low urgency, in other words, data communication with a low degree of immediacy is for example, communication related to transmission/reception of map data, communication for uploading probe data to the map server 4B, and transmission/reception of software update programs. In a case where the vehicle has an audio equipment acquiring music data from a cloud server and plays it, communication for downloading the music data may also be the data communication with low urgency. However, even in data communication related to multimedia such as the music data and video data, user convenience may be impaired when music or video stops in the middle. Therefore, the data communication related to the multimedia corresponds to data communication that requires a higher degree of immediacy than the communication for transmitting and receiving the probe data or the map data.

In addition, in Patent Literature 1, four parameters are combined and scored to select a communication method for the vehicle to communicate with an external device. That is, in a configuration disclosed in Patent Literature 1, a computational load for score calculation is placed on a processor. In contrast, according to the configuration of the present disclosure, the wireless communication paths are allocated to the respective in-vehicle devices 6 according to the RSRPs. Therefore, according to the configuration of the present disclosure, an effect that a calculation load can be reduced as compared to the configuration disclosed in Patent Literature 1 can be expected. In addition, according to the configuration of the present disclosure, the communication paths can be allocated according to delay requests of the respective in-vehicle devices 6. By allocating the communication paths according to the delay requests to the respective in-vehicle devices 6, a total of delay time exceeding allowable ranges of the respective in-vehicle devices 6 can be reduced for the entire system including multiple in-vehicle devices 6. In other words, the communication of the in-vehicle communication system 1 can be optimized as a whole.

While one embodiment of the present disclosure has been described above, the present disclosure is not limited to the embodiment described above, and various modifications to be described below are included in the technical scope of the present disclosure, and may be implemented by various modifications within a scope not departing from the spirit of the present disclosure, in addition to the modifications to be described below. For example, various modifications to be described below may be executed in combination as appropriate within a scope of the present disclosure that does not cause technical inconsistency. The components having the same functions as those described in the embodiment described above are denoted by the same reference symbols, and description of the same components will be omitted. When only a part of a configuration is described, the other parts of the configuration may employ a preceding configuration described in the embodiment.

For example, the path selection unit F32 may be configured to allocate an APN having a largest RSRP to only one in-vehicle device 6 that handles data for vehicle control. Further, the path selection unit F32 may be configured to operate the top two APNs in the RSRP as APNs dedicated to data communication for vehicle control. An in-vehicle device 6 that handles vehicle control data is, for example, the automated driving device 6A or the vehicle-side remote control device. This configuration corresponds to a configuration in which the path selection unit F32 operates one or more of multiple APNs available to the vehicle as APNs dedicated to data communication for vehicle control.

According to the above configuration, it is possible to further reduce the delay time of data communication for vehicle control. Furthermore, in the configuration described above, since a communication line for vehicle control is independent of a communication line for multimedia, a risk of delay in data communication for vehicle control can be reduced. In particular, data communication related to remote control of the vehicle has very strict requirements for delay, and it may be preferable to provide redundancy in the communication path. Based on these circumstances, when the in-vehicle communication system 1 includes the vehicle-side remote control device and a remote control function is activated, the path selection unit F32 operates the top two APNs in the RSRP as APNs dedicated to the vehicle-side remote control device. According to the above configuration, redundancy can be imparted to the communication path related to remote control, and delay can be reduced.

The speed index acquisition unit F2 may be configured to change its operation mode according to a moving speed of the vehicle. When the moving speed of the vehicle is high, that is, when the vehicle is moving at high speed, propagation environment changes greatly. Therefore, the average value of received signal strength of RS may be calculated based on the received signal strength of RS collected in a relatively short period. For example, the speed index acquisition unit F2 may shorten a length of the sampling period for collecting the received signal strength to calculate the RSRP when the vehicle's moving speed is over a predetermined switching threshold, as compared to when the moving speed is under the switching threshold.

Specifically, when the moving speed is less than the switching threshold, the speed index acquisition unit F2 sets the sampling period at a length exceeding 5 milliseconds, such as 10 milliseconds. On the other hand, when the moving speed is equal to or higher than the switching threshold, the speed index acquisition unit F2 sets the sampling period at 2 milliseconds or less, for example, hundreds of microseconds. The length of the sampling period when the moving speed is equal to or higher than the switching threshold may be set a half of the sampling period when the moving speed is less than the switching threshold. According to the above configuration, an influence of the change in the propagation environment on calculation of the RSRP can be reduced.

The switching threshold may be set at, for example, 60 km/h or 80 km/h. The speed index acquisition unit F2 may acquire the moving speed from the vehicle speed sensor, the automated driving device 6A, and the like. The speed index acquisition unit F2 may estimate the moving speed based on a Doppler shift amount of a signal transmitted by the radio base station 2. Also, the speed index acquisition unit F2 may adjust the sampling period in multiple stages such that the sampling period become shorter with increase in moving speed. The sampling period can also be called an observation period.

The speed index acquisition unit F2 may be configured to calculate the RSRP by weighted averaging observed values of received power of RSs collected during the sampling period by increasing a weight of a newer observed value in acquisition time. When the observed value of the received strength observed within the sampling period has an increasing trend, the speed index acquisition unit F2 may set a value of the RSRP at a value that is a predetermined amount greater than an actual average value. When the observed value has a decreasing trend, the speed index acquisition unit F2 may set the value of the RSRP at a value that is a predetermined amount smaller than the average value. The value that is the predetermined amount greater than the average value may be a value between the average value and the maximum value, for example. The value that is the predetermined amount smaller than the average value may be a value between the average value and the minimum value, for example. The increasing trend of the received signal strength indicates that the vehicle is approaching the radio base station 2. According to the above configuration, a wireless communication service provided by the radio base station 2 that the vehicle is approaching can be allocated to the in-vehicle device 6 having a relatively small delay allowable amount. Based on a technical concept similar to the above, the speed index acquisition unit F2 may apply an offset (in other words, correction) to a latest RSRP according to whether the RSRP is on an increasing trend. The speed index acquisition unit F2 may use the offset RSRP to determine the APN allocation for each in-vehicle device 6.

A parameter for determining allocation of SIMs 55/APNs for the respective in-vehicle devices 6 may be an index for cell selection, and the RSRQ may be used instead of the RSRP. The path selection unit F32 may allocate one of the wireless communication paths larger in the RSRQ than another of the wireless communication paths to one of the in-vehicle devices 6 smaller in delay allowable value than another of the in-vehicle devices 6. Of course, the path selection unit F32 may use the RSRP and the RSRQ together. For example, when there are two or more APNs at the same level of the RSRP, the path selection unit F32 may allocate an APN having a relatively large RSRQ among them to an in-vehicle device 6 having a relatively small delay allowable amount.

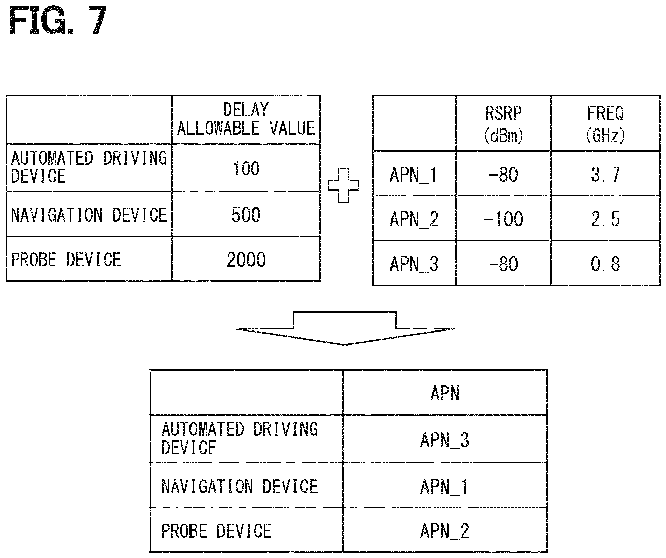

In addition to the RSRP, the path selection unit F32 may be configured to determine APN allocation for each in-vehicle device 6 based on a value of a frequency allocated to each APN. Specifically, as shown in FIG. 6, the communication control unit F3 includes an allocated frequency acquisition unit F33 that acquires the allocated frequency for each APN from the radio base station 2. For example, when there are two or more APNs at the same level of the RSRP, the path selection unit F32 may allocate an APN having a relatively low frequency among them to an in-vehicle device 6 having a relatively small delay allowable amount. For example, as shown in FIG. 7, when APN_1 and APN_3 are at the same level of the RSRP, and an allocated frequency of the APN_3 is lower than an allocated frequency of the APN_1, the path selection unit F32 allocates the APN_1 to the automated driving device 6A having the smallest delay allowable amount.

Generally, when the communication environment is stable, the communication speed becomes higher with increase in frequency. However, since a vehicle moves at a relatively high speed as compared with a pedestrian or the like, a degree of change in position relative to the radio base station 2 over time is large. The communication speed is more susceptible to fluctuations in the communication environment with increase in frequency. Therefore, in a technical field of the wireless communication between the vehicle and the external device, overall communication speed may decrease with increase in frequency. The above configuration has been created by focusing on the above difficulty, and when there are two or more APNs at the same level of the RSRP, the path selection unit F32 executes path selection such that an APN having a relatively low allocated frequency among them is regarded as an APN having a relatively high communication speed. According to this configuration, although the vehicle's positional relationship with the radio base station 2 is likely to change, the path selection unit F32 can appropriately allocate a communication path to each in-vehicle device 6.

The APN_3 shown in FIG. 7 is a third APN available to the wireless communication device 5. The APN_3 is an APN that is available by the first SIM 55A or a third SIM 55, for example. In this disclosure, an expression "the same level" is not limited to being exactly the same. For example, APNs at the same level of the RSRP can include APNs where a difference in the RSRP is within, for example, 5 dBm. The above configuration corresponds to a configuration in which the path selection unit F32 uses the allocated frequency in addition to the RSRP as an index of communication speed for each APN. In other words, the above configuration corresponds to a configuration that estimates the communication speed for each APN using the allocated frequency and the RSRP, and preferentially allocates an APN expected to have a relatively high communication speed to the in-vehicle device 6 having a relatively small delay allowable amount.

The path selection unit F32 may determine whether to perform allocation of APNs in consideration of the allocated frequency based on the moving speed of the vehicle, as a further application example. For example, when the moving speed of the vehicle is less than the predetermined switching threshold, the path selection unit F32 may allocate the APNs to the respective in-vehicle devices 6 without using the allocated frequency. On the other hand, when the moving speed of the vehicle is over the predetermined switching threshold, the path selection unit F32 may allocate the APNs to the respective in-vehicle devices 6 using both the RSRP and the allocated frequency.

According to the above configuration, when the moving speed of the vehicle is less than the switching threshold, the path selection unit F32 is capable of determining the APN allocation for each in-vehicle device 6 by a relatively simple rule, and thereby, the load on the processing unit 51 can be reduced. Further, when the moving speed of the vehicle is equal to or higher than the switching threshold, the path selection unit F32 determines the APN allocation for each in-vehicle device 6 considering a degree of influence of changes of the communication environment on the communication speed for each APN. Therefore, the path selection unit F32 is capable of allocating the APNs for the respective in-vehicle devices 6 in consistent with their effective communication speed, and thereby the risk of communication delay exceeding the allowable level can be reduced.

In the above, in order to simplify the explanation, a case where one SIM 55 supports only one APN is exemplified, but the present disclosure is not limited to this. For example, one SIM 55 may support multiple APNs. Specifically, the first SIM 55A may be a SIM 55 that enables the wireless communication device 5 to use two APNs, APN_1a and APN_1b. The second SIM 55B may be a SIM 55 that enables the wireless communication device 5 to use two APNs, APN_2a and APN_2b.

Since serving cells corresponding to the respective APNs associated with one SIM 55 are common, RSRPs of the APNs derived from the same SIM 55 can also be at the same level. When the wireless communication device 5 has such a SIM 55 that supports multiple APNs, a difference of the communication speed of the respective APNs associated with the SIM 55 may be estimated using another index indicating the communication speed of each APN. The index indicating the communication speed for each APN, other than the RSRP, is, for example, the allocated frequency and a delay characteristic value to be described later.

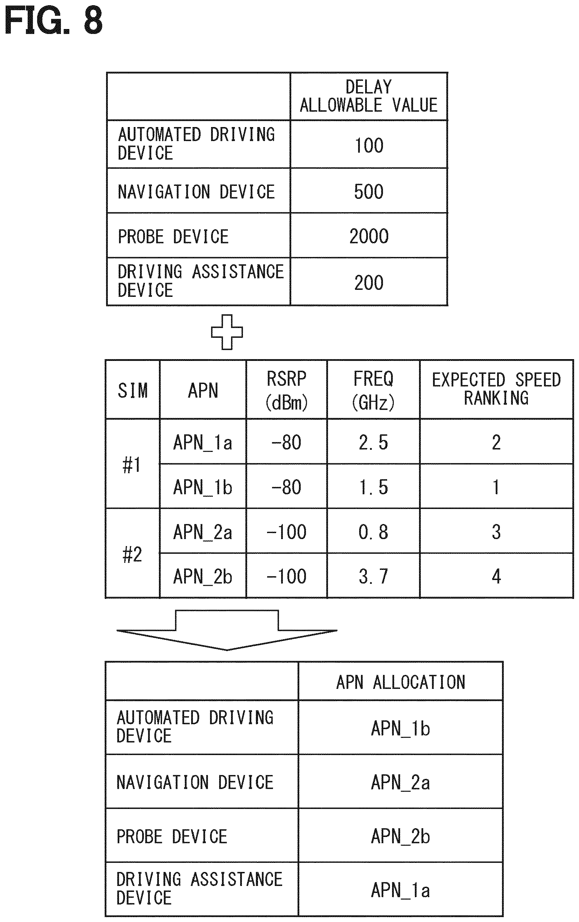

For example, as shown in FIG. 8, the path selection unit F32 ranks expected communication speeds for respective APNs in consideration of both the RSRP and the allocated frequency, and then allocates an APN having a relatively high expected communication speed to an in-vehicle device 6 having a relatively small delay allowable amount. In FIG. 8, the smaller a numerical value in column of ranking of communication speeds, the higher an expected value of the communication speed.

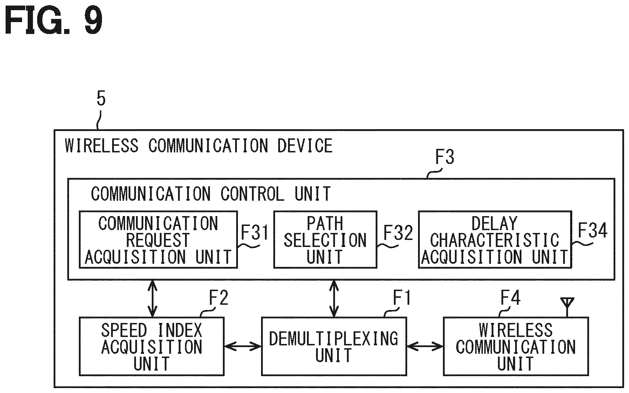

Further, as described above, the path selection unit F32 may determine the APN allocation for each in-vehicle device 6 through estimation of the communication speed for each APN by using the delay characteristic value notified from the network device in addition to the RSRP. In order to realize such a configuration, the wireless communication device 5 may include a delay characteristic acquisition unit F34 as a functional block shown in FIG. 9. The delay characteristic acquisition unit F34 acquires the delay characteristic value for each APN from the network device corresponding to each APN.

The delay characteristic value (i.e., delay threshold, hereinafter also referred to as dT) is a parameter used for communication control. The delay characteristic value is determined by the PCRF 34 when the communication connection between the wireless communication device 5 as the UE and the core network 3 is established, for example. The MME 31 and/or the radio base station 2 notifies the wireless communication device 5 of the delay characteristic value determined by the PCRF 34. The delay characteristic value for each APN is provided by, for example, the PCRF 34 corresponding to each APN. The delay characteristic value may be determined by the radio base station 2 based on information received from the core network 3 and distributed.

The delay characteristic value is a parameter for the UE to verify whether transmission delay of communication packets occurs at a level beyond an expected range of delay time, in other words, whether the QoS is ensured from the viewpoint of communication delay. In one aspect, the delay characteristic value corresponds to an upper limit value of the expected range of delay time of communication packets. The larger the delay characteristic value, the larger expected communication delay time. The smaller the delay characteristic value for an APN, the smaller an allowable delay amount for the APN, that is, the higher a real-time performance for the APN. The word "APN" here can be read as a "communication path" for implementation.

The delay characteristic acquisition unit F34 acquires the above-described delay characteristic value from the network device corresponding to each APN. The delay characteristic value is provided by the core network 3 when communication connection is established. The delay characteristic acquisition unit F34 provides the delay characteristic value to the path selection unit F32. In the present disclosure, as an example, the communication control unit F3 includes the delay characteristic acquisition unit F34, but the present disclosure is not limited to this. The delay characteristic acquisition unit F34 may be arranged outside the communication control unit F3. For example, the speed index acquisition unit F2 may have a function of the delay characteristic acquisition unit F34. The arrangement of the functions provided in the wireless communication device 5 can be appropriately changed.

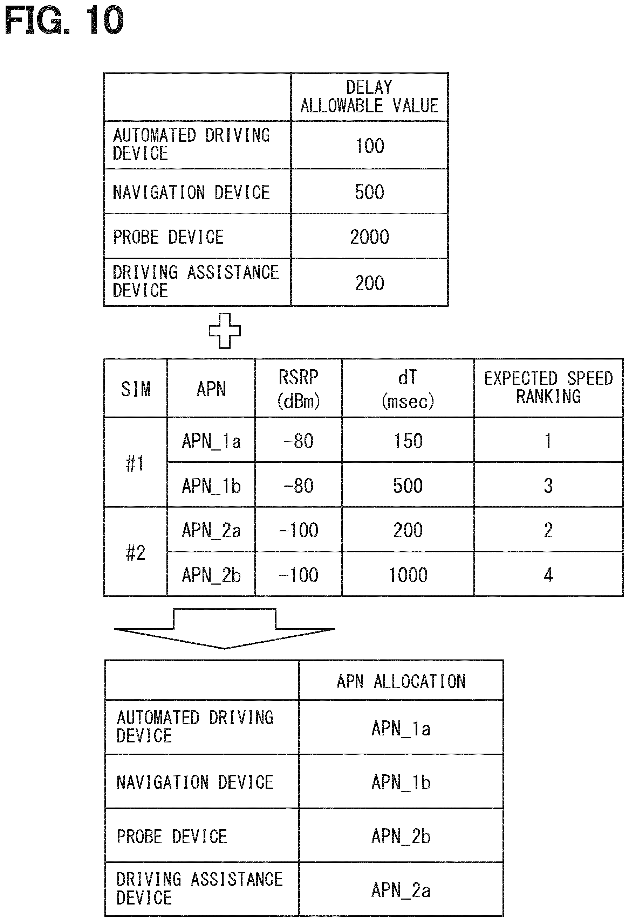

When the wireless communication device 5 has a SIM 55 that supports multiple APNs, the path selection unit F32 ranks the communication speeds expected for the respective APNs based on the delay characteristic value for each APN in addition to the RSRP for each SIM 55. In such a configuration, the path selection unit F32 allocates an APN having a relatively high expected communication speed to an in-vehicle device 6 having a relatively small delay allowable amount. For example, as shown in FIG. 10, the path selection unit F32 ranks expected communication speeds for the respective APNs in consideration of both the RSRP and the delay characteristic value, and then allocates an APN having a relatively high expected communication speed to an in-vehicle device 6 having a relatively small delay allowable amount.

The example shown in FIG. 10 shows a result of ranking the expected communication speeds for the respective APNs by using the delay characteristic value taking priority over the RSRP. The above-described configuration ranks the expected communication speeds for the respective APNs using the delay characteristic value prior to using the RSRP, and then determines the APN allocation for each in-vehicle device 6. This configuration corresponds to a configuration that allocates an APN having a relatively large RSRP to an in-vehicle device 6 having a relatively small delay allowable amount when there are two or more APNs at the same level of delay characteristic value. In the above configuration, the path selection unit F32 firstly ranks the communication speeds for the respective APNs using the delay characteristic value. When there are multiple APNs at the same level of delay characteristic value, the path selection unit F32 further ranks them in detail using their RSRPs.

The path selection unit F32 may rank the expected communication speeds for the respective APNs using the RSRP prior to using the delay characteristic value in another embodiment. In that case, the ranking positions of APN_1b and APN_2a in FIG. 10 are switched. The above-described configuration ranks the expected communication speeds for the respective APNs using the RSRP prior to using the delay characteristic value, and then determines the APN allocation for each in-vehicle device 6. This configuration corresponds to a configuration that allocates APN having a relatively small delay characteristic value to an in-vehicle device 6 having a relatively small delay allowable amount when there are two or more APNs at the same level of the RSRP. In the above configuration, the path selection unit F32 firstly ranks the communication speeds for the respective APNs using the RSRP. When there are multiple APNs with the same level of the RSRP, the path selection unit F32 further ranks them in detail using their delay characteristic values.

Furthermore, the path selection unit F32 may use a combination of the three parameters: the RSRP, the delay characteristic value, and the allocated frequency, as indices for ranking the communication speeds for the respective APNs. The priority (in other words, weight) of each parameter can be, for example, in the order of delay characteristic value > RSRP > allocated frequency. Of course, the path selection unit F32 may evaluate the expected communication speed of each APN using the RSRP firstly, in the order RSRP > delay characteristic value> allocated frequency.

The path selection unit F32 can sequentially change the APN allocation for each in-vehicle device 6 by performing the path selection process shown in FIG. 4 periodically or each time a predetermined event occurs. This makes it possible to allocate APNs according to the current communication environment.

By the way, when changing the APN allocated to a certain in-vehicle device 6, a communication between this in-vehicle device 6 and the external device 4 may be momentarily interrupted. This is because when the APN used for communication between a certain in-vehicle device 6 and a certain external device 4 is changed, searching and setting of a communication path using a new APN from the in-vehicle device 6 to the external device 4 is performed. The resetting of the communication path is achieved by exchanging control signals between the core network 3 and the wireless communication device 5. Specifically, since an IP address and a port number applied to data communication change with path selection, control signals are exchanged between the network and the wireless communication device 5 to ensure consistency of the communication settings such as the IP address.

Focusing on such a difficulty, while data communication for vehicle control being performed or the vehicle traveling, an execution of a path change process for the vehicle control device such as the automated driving device 6A may be suspended. The path change process is a process of changing the APN allocation. For example, the path change process for the automated driving device 6A may be executed when the automated driving device 6A is not performing the data communication with the automated driving management center 4A, or when the vehicle is stopped. According to the configuration, it is possible to reduce a risk that data communication with high urgency is temporarily stopped in the middle. In addition, the path change process for the automated driving device 6A may be executed when a predetermined path change condition is satisfied. The case in which a predetermined change condition is satisfied is, for example, when an APN that is larger in the RSRP than the current APN appears, or when there is a change of the serving cell. The path change condition may include a case where an APN different from the current APN is allocated by the path allocation process shown in FIG. 4.

The wireless communication device 5 may output a predefined error signal to the automated driving device 6A when there is no APN that can achieve a communication speed required by the automated driving device 6A. The error signal may be a signal indicating that the requested communication speed, in other words, real-time communication cannot be guaranteed. According to the configuration, in response to a reception of the error signal from the wireless communication device 5, the automated driving device 6A may perform a vehicle control for safety. The vehicle control for safety may be, for example, reducing the vehicle traveling speed by a predetermined amount, or transferring an authority of driving operation to an occupant on the driver sheet.

Further, the wireless communication device 5 may sequentially output a communication speed report signal to the automated driving device 6A. The communication speed report signal is a signal that indicates a status of communication between the automated driving device 6A and the automated driving management center 4A. The communication speed report signal may be a signal directly or indirectly indicating a degree of communication delay such as, for example, an average value of delay time, a packet error rate, or the delay characteristic value. The communication speed here may be only a speed of upstream communication, or may be only a speed of downstream communication. According to the configuration, the automated driving device 6A can change the vehicle behavior (in other words, system response) based on the communication speed report signal from the wireless communication device 5. For example, the automated driving device 6A may plan and operate a reduction of the traveling speed, a handover request, and the like, based on the communication speed with the automated driving management center 4A being slow.

In addition, the wireless communication device 5 may store data indicating the communication status in a storage device (not shown) as a communication log, for example. According to the configuration, it may be possible to store the communication status during the automated driving. Further, it may be possible to leave data indicating that the communication error occurred. Such data can be used for cause analysis when an accident occurs during the automated driving, for example. By leaving the communication status with an external device during the automated driving as a log, it becomes easier to analyze the cause of the accident.

The wireless communication device 5 described above is suitable for a vehicle that is designed according to an operational design domain (ODD) described below. The ODD includes a condition that is satisfied when a delay time in communication with the automated driving management center 4A is less than a predetermined threshold value. According to the wireless communication device 5 described above, a risk that data communication related to the automated driving is delayed beyond a predetermined allowable time can be reduced. In one example, the wireless communication device 5 described above sequentially transmits information indicating the degree of communication delay to the automated driving device 6A. Therefore, the automated driving device 6A can change the system response according to the communication status. As a result, a risk that the automated driving continues even though the ODD is not satisfied from the viewpoint of communication delay can be reduced. The ODD specifies conditions and environments in which the automated driving can be executed.

### <Other Modifications>

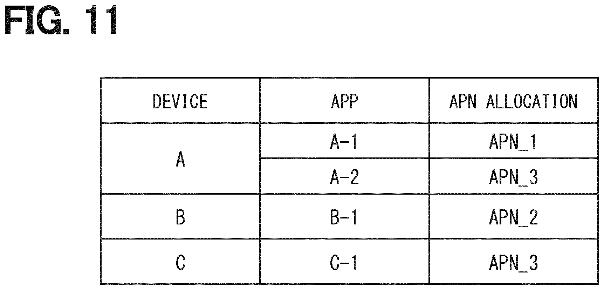

The wireless communication device 5 does not have to control the data communication paths in units of in-vehicle device 6. The wireless communication device 5 may switch the communication paths in units of app (application software). For example, as shown in FIG. 11, when one in-vehicle device 6 executes multiple apps, the path selection unit F32 may allocate multiple APNs corresponding to respective apps to one in-vehicle device 6. The APN may be allocated per in-vehicle device 6 or per app. Devices A, B, and C shown in FIG. 11 may be, in this order, automatic device 6A, navigation device 6B, and probe device 6C, for example. An app A-1 can be an app that acquires traveling support information and generates a control plan. An app A-2 can be an app that uploads data indicating an operation state of the automated driving device 6A, which is locally stored in the vehicle, to the automated driving management center 4A, for example. An app B-1 may be a navigation app. An app C-1 may be an app that generates probe data and uploads it to the map server 4B. The expression "app" in this disclosure means application software. One APN may be allocated to multiple apps. The technical idea of allocating a wireless communication service to each in-vehicle device 6 in the present disclosure also includes a configuration of allocating a wireless communication service to each app.

Further, in the above as one example, the delay requirement of each in-vehicle device 6 is expressed by a parameter, such as delay allowable value, that decreases in numerical value as the immediacy is more required. However, the present disclosure is not limited to the expression. The delay request may be expressed by a parameter that increases in numerical value as the immediacy is more required. The delay request may be expressed in immediacy levels that indicate degrees of requested immediacy. The immediacy level is higher, the shorter requested delay time.

### <Additional Notes>

The device and the method described in the present disclosure may be also implemented by a dedicated computer which constitutes a processor programmed to execute one or more functions concretized by computer programs. Also, the device and the method described in the present disclosure may be also implemented by a dedicated hardware logic circuit. Also, the device and the method described in the present disclosure may be also implemented by one or more dedicated computers which are constituted by combinations of a processor for executing computer programs and one or more hardware logic circuits. The computer program may be stored in a computer-readable non-transitory tangible storage medium as an instruction executed by a computer. That is, the means and/or the functions which are provided by the wireless communication device 5 and the like may be provided by software stored in tangible memory devices and computers for executing them, only software, only hardware, or a combination thereof. For example, a part of or all of the functions of the wireless communication device 5 may be implemented as hardware. An aspect in which a certain function is implemented as hardware includes an aspect in which the function is implemented by use of one or more ICs or the like. The wireless communication device 5 may be implemented by using an MPU, a GPU, or a DFP (Data Flow Processor) instead of the CPU. The wireless communication device 5 may be implemented by combining multiple types of calculation processing devices such as a CPU, an MPU, and a GPU. The wireless communication device 5 may be implemented by using a SoC (System-on-Chip), Further, for example, various processing units may be implemented by using a FPGA (Field-Programmable Gate Array), an ASIC (Application Specific Integrated Circuit), or the like. The various programs described above may be stored in a non-transitory tangible storage medium. Various storage media such as HDD (Hard-disk Drive), SSD (Solid State Drive), EPROM, and SD card can be used as the program storage medium.

## Claims

1. A vehicle wireless communication device used as an interface for communication between at least one in-vehicle device of a vehicle and an external device that is another communication device placed outside the vehicle, the vehicle wireless communication device comprising:
subscriber identification modules (55A, 55B) that correspond, respectively, to wireless communication services available to the vehicle wireless communication device;
a received power observation unit (F2) configured to obtain a received power measurement value for each of the wireless communication services, the received power measurement value being a received signal strength of a reference signal transmitted from a radio base station (2);
a delay allowable amount acquisition unit (F31) configured to acquire a delay allowable amount from the at least one in-vehicle device, the delay allowable amount indicating directly or indirectly a length of delay time allowable in the communication; and
a communication path selection unit (F32) configured to select a wireless communication service from among the wireless communication services for the communication between the at least one in-vehicle device and the external device based on the received power measurement value of each of the wireless communication services and the delay allowable amount of the at least one in-vehicle device, wherein
the communication path selection unit is configured to allocate a wireless communication service, which is relatively large in the received power measurement value among the wireless communication services, to an in-vehicle device that is relatively small in the delay allowable amount among the at least one in-vehicle device.

2. The vehicle wireless communication device according to claim 1, wherein
the at least one in-vehicle device is at least one of in-vehicle devices,
the delay allowable amount acquisition unit is configured to acquire the delay allowable amount from each of the in-vehicle devices,
the communication path selection unit is configured to select a wireless communication service from among the wireless communication services for each of the in-vehicle devices based on the received power measurement value of each of the wireless communication services and the delay allowable amount of each of the in-vehicle devices, and
the communication path selection unit is configured to allocate a wireless communication service, which is relatively large in the received power measurement value among the wireless communication services, to an in-vehicle device that is smaller in the delay allowable amount than another in-vehicle device among the in-vehicle devices.

3. The vehicle wireless communication device according to claim 2, further comprising
an allocated frequency acquisition unit (F33) configured to acquire a frequency for each of the wireless communication services, the frequency being allocated by the radio base station, wherein
the communication path selection unit is configured to allocate a wireless communication service, which is relatively large in the received power measurement value among the wireless communication services, to an in-vehicle device that is smaller in the delay allowable amount than another in-vehicle device among the in-vehicle devices, and
when more than one wireless communication services among the wireless communication services are at the same level in the received power measurement value, the communication path selection unit is configured to allocate a wireless communication service, which is relatively low in the frequency among the more than one wireless communication services, to an in-vehicle device that is smaller in the delay allowable amount than another in-vehicle device among the in-vehicle devices.

4. The vehicle wireless communication device according to claim 2 or 3, further comprising
a delay characteristic acquisition unit (F34) configured to acquire a delay characteristic value for each of the wireless communication services from a network device (31, 32, 33, 34) that constitutes a wireless communication network, the delay characteristic value being a parameter that indicates an upper limit of an assumed range of delay time in the communication,
the communication path selection unit is configured to allocate a wireless communication service, which is relatively large in the received power measurement value among the wireless communication services, to an in-vehicle device that is smaller in the delay allowable amount than another in-vehicle device among the in-vehicle devices, and
when more than one wireless communication services among the wireless communication services are at the same level in the received power measurement value, the communication path selection unit is configured to allocate a wireless communication service, which is relatively low in the delay characteristic value among the more than one wireless communication services, to an in-vehicle device that is smaller in the delay allowable amount than another in-vehicle device among the in-vehicle devices.

5. The vehicle wireless communication device according to claim 2 or 3, further comprising
a delay characteristic acquisition unit (F34) configured to acquire a delay characteristic value for each of the wireless communication services from a network device (31, 32, 33, 34) that constitutes a wireless communication network, the delay characteristic value being a parameter that indicates an upper limit of an assumed range of delay time in the communication,
the communication path selection unit is configured to allocate a wireless communication service, which is relatively low in the delay characteristic value among the wireless communication services, to an in-vehicle device that is smaller in the delay allowable amount than another in-vehicle device among the in-vehicle devices, and
when more than one wireless communication services among the wireless communication services are at the same level in the delay characteristic value, the communication path selection unit is configured to allocate a wireless communication service, which is relatively large in the received power measurement value among the more than one wireless communication services, to an in-vehicle device that is smaller in the delay allowable amount than another in-vehicle device among the in-vehicle devices.

6. The vehicle wireless communication device according to any one of claims 1 to 5, wherein
the received power observation unit is configured to obtain the received power measurement value as an average value or a median value of received signal strengths of reference signals observed in a predetermined sampling period, and
a length of the sampling period varies according to a moving speed of the vehicle.

7. The vehicle wireless communication device according to any one of claims 1 to 6, wherein
the at least one in-vehicle device includes a vehicle control device that is configured to communicate data about automated driving or driving assistance to a predetermined external device,
the communication path selection unit is configured to execute path change process that changes a wireless communication service allocated to the vehicle control device when a predetermined path change condition is satisfied, and
the path change process is executed at a timing when data communication between the vehicle control device and the external device is not performed or at a timing when the vehicle is stopped.

8. The vehicle wireless communication device according to any one of claims 1 to 7, wherein
the at least one in-vehicle device includes a vehicle control device (6A) that is configured to communicate data about automated driving or driving assistance to a predetermined external device, and
the vehicle wireless communication device is configured to output a predetermined error signal to the vehicle control device when a communication delay time in any one of the wireless communication services does not become less than or equal to the delay allowable amount required by the vehicle control device.

9. The vehicle wireless communication device according to any one of claims 1 to 8, wherein
the vehicle wireless communication device is used for a vehicle that is designed according to an operation design domain, the operation design domain including a condition that is satisfied when a delay time in communication with the external device related to automated driving is less than a predetermined threshold,
the at least one in-vehicle device includes a vehicle control device (6A) that is configured to communicate data related to the automated driving to the external device, and
the vehicle wireless communication device is configured to output delay information to the vehicle control device, the delay information indicating a degree of delay in communication between the vehicle control device and the external device.

10. A communication control method for control of communication between at least one in-vehicle device of a vehicle and an external device that is a communication device placed outside the vehicle, the communication control method using wireless communication services in parallel, the wireless communication services corresponding, respectively, to subscriber identification modules, the communication control method being executed by at least one processor (51),
the communication control method comprising:
a received power observation step (S2) of obtaining a received power measurement value for each of the wireless communication services, the received power measurement value being a received signal strength of a reference signal transmitted from a radio base station (2);
a delay allowable amount acquisition step (S3) of acquiring a delay allowable amount from the at least one in-vehicle device, the delay allowable amount indicating directly or indirectly a length of delay time allowable in the communication; and
a communication path selection step (S4) of selecting a wireless communication service from among the wireless communication services for the communication between the at least one in-vehicle device and the external device based on the received power measurement value of each of the wireless communication services and the delay allowable amount of the at least one in-vehicle device, wherein
the communication path selection step includes allocating a wireless communication service, which is relatively large in the received power measurement value among the wireless communication services, to an in-vehicle device that is relatively small in the delay allowable amount among the at least one in-vehicle device.
